# EUROPÄISCHE PATENTSCHRIFT

(11) **EP 2 625 442 B1**
(45) Veröffentlichungstag und Bekanntmachung des Hinweises auf die Patenterteilung: **20.12.2017**
(21) Anmeldenummer: 11767678.3
(22) Anmeldetag: 04.10.2011
(51) Int. Cl.: F16H 31/00, F16D 41/10, B60N 2/44, B60N 2/22, B60N 2/16, B60N 2/18

(54) **KLEMMROLLENFREILAUF FÜR EINE VERSTELLEINRICHTUNG IN EINEM KRAFTFAHRZEUG**
CLAMPING ROLLER FREEWHEEL FOR AN ADJUSTING DEVICE IN A MOTOR VEHICLE
ROUE LIBRE À ROULEAUX DE SERRAGE POUR UN DISPOSITIF DE RÉGLAGE DANS UN VÉHICULE AUTOMOBILE

(30) Priorität: 12.11.2010 DE 102010043825; 08.10.2010 DE 102010047748
(43) Veröffentlichungstag der Anmeldung: 14.08.2013
(73) Patentinhaber: Adient Luxembourg Holding S.à r.l., 2453 Luxembourg (LU)
(72) Erfinder: KARTHAUS, Ulrich, 42699 Remscheid (DE)
(74) Vertreter: Bauer, Wulf
(86) Internationale Anmeldenummer: PCT/EP2011/067269
(87) Internationale Veröffentlichungsnummer: WO 2012/045714

(56) Entgegenhaltungen:
- EP-A1- 1 411 203
- DE-A1-102005 028 307
- JP-A- 2001 140 926
- US-A1- 2008 287 244

## Beschreibung

Die Erfindung bezieht sich auf einen Klemmrollenfreilauf für eine Verstelleinrichtung in einem Kraftfahrzeug, insbesondere in einem Kraftfahrzeugsitz, der Klemmrollenfreilauf weist eine zylindrische Mantelfläche, die eine Achse definiert, mindestens ein Rollenpaar aufweisend eine erste und eine zweite Rolle, eine Ausgangswelle, die zentrisch zur Achse ist, ein Klemmelement, das mit der Ausgangswelle in Drehverbindung ist, und das für jede Rolle eine Klemmkontur aufweist, die sich auf einer der zylindrischen Mantelfläche gegenüberliegenden Seite des Rollenpaares befindet und ein Distanzmittel auf, das sich zumindest teilweise zwischen der ersten und zweiten Rolle befindet und das elastische Eigenschaften hat.
Ein derartiger Klemmrollenfreilauf ist aus der EP 497 007 A1 bekannt. Dabei ist das Klemmelement Teil eines Gehäuses. Derartige Klemmrollenfreiläufe werden vorzugsweise für Schrittschaltvorrichtungen eingesetzt, wie sie beispielsweise aus EP 1 152 168 B1 und DE 195 40 631 C2 bekannt sind.
Zum weiteren Stand der Technik wird auch auf die DE 10 2009 028 213 A1 verwiesen, bei ihr ist die zylindrische Mantelfläche eine zylindrische Innenfläche und sind die Klemmschrägen innerhalb dieser zylindrischen Innenfläche vorgesehen. Die zylindrische Innenfläche ist Teil eines Gehäuses.

Das Dokument DE 10 2005 028307 A1 ist als nächstliegender Stand der Technik betrachtet und es offenbart einen Klemmrollenfreilauf, der die Merkmale des Oberbegriffs des Anspruchs 1. Bei derartigen Klemmrollenfreiläufen wünscht man ein möglichst hohes Sperrmoment, es soll größer als 60 Nm sein, wobei die Hertz'sche Pressung berücksichtigt ist. Das Mindestbruchmoment soll über 200 Nm liegen. Ziel ist es auch, dass im Verlauf über den Drehwinkel das Sperrmoment zunächst eine kleinere Steigung aufweist und anschließend, oberhalb eines gewissen Drehwinkels, eine höhere Steigung aufweist. Oberhalb eines weiteren Drehwinkels soll die Klemmung möglichst hoch und konstant gehalten werden, bevor permanente Deformationen und Zerstörungen eintreten.

Der vorbekannte Klemmrollenfreilauf hat n Rollen. Die Hälfte hiervon ist für eine Drehrichtung zuständig, die andere Hälfte für die andere Drehrichtung. Das Sperrmoment in einer Richtung wird daher nur von der Hälfte n/2 der Rollen bewirkt. Die andere Hälfte der Rollen ist dabei passiv. Um das Sperrmoment zu erhöhen, könnte man die Anzahl n der Rollen im Klemmrollenfreilauf vergrößern. Nun möchte man aber nicht die Abmessungen des Klemmrollenfreilaufs erhöhen. Der Platz im Klemmrollenfreilauf ist beschränkt.

Bei den vorbekannten Klemmrollenfreiläufen besteht das Problem, dass diese bei schwellender Belastung die einmal eingenommene Klemmposition nicht beibehalten. Fährt das Fahrzeug, in dem sich der mit dem Klemmrollenfreilauf ausgerüstete Fahrzeugsitz befindet, über Bodenwellen oder wird das Fahrzeug ähnlichen, alternierenden Belastungen unterworfen, so gehen abwechselnd die erste und die zweite Rolle in Klemmposition. Da in der Regel die Belastungen, die auf das Fahrzeug nach oben in z-Richtung wirken, und die Belastungen, die nach unten wirken, unterschiedlich sind, führt dies zu unterschiedlichen Belastungen in den beiden Drehrichtungen des Klemmrollenfreilaufs. Dies wiederum bewirkt, dass die Wege der ersten und der zweiten Rolle unterschiedlich sind, es entsteht jeweils ein Mikroschlupf, der sich auf die Dauer zu einem Ablaufen des Klemmrollenfreilaufs aufsummiert. Die z-Richtung verläuft rechtwinklig zur Fahrebene.

Hier setzt nun die Erfindung ein. Sie hat es sich zur Aufgabe gemacht, den Klemmrollenfreilauf der eingangs genannten Art dahingehend weiterzubilden, dass er auch bei alternierenden Belastungen die einmal eingenommene Winkelposition beibehält, also nicht ohne Eingriff eines Benutzers sich selbständig verstellt.

Diese Aufgabe wird gelöst durch einen Klemmrollenfreilauf mit den Merkmalen des Anspruchs 1.

Zumindest einige der Rollen werden nun nicht mehr direkt angefedert, sondern indirekt. Das Distanzstück ist vorzugsweise aus einem harten Kunststoffmaterial oder einem Metall hergestellt. Es hat aufgrund seines Materials zwar eine Elastizität, diese Elastizität ist aber höchstens 1%, vorzugsweise weniger, als die Elastizität des Distanzmittels nach dem Stand der Technik, das beispielsweise als Gummikugel, Schraubenfeder oder dergleichen ausgeführt ist. Die Anfederung der Rollen wird nun dadurch erreicht, dass die Feder das Distanzstück in den Spalt zwischen den beiden Rollen des Rollenpaars drückt. Das Distanzstück hat mindestens eine Schrägfläche, mit der es normalerweise an einer Rolle anliegt, vorzugsweise hat es mindestens zwei derartige Schrägflächen, mit denen es jeweils an einer Rolle des Rollenpaars anliegt. Dabei wird eine V-förmige oder X-förmige Querschnittsform bei radialer Schnittebene erreicht. Die V-Spitze weist dabei bevorzugt zur Klemmkontur hin. Dabei muss nicht konkret eine Spitze ausgebildet sein, vielmehr kann sich das Distanzstück nach einer Verjüngung auch wieder erweitern. Es kommt jedoch darauf an, dass durch die mindestens eine Schrägfläche eine Verjüngung vorliegt. Im Betrieb drückt die Feder auf das Distanzstück, dessen Schrägfläche drückt eine benachbarte Rolle in Umfangsrichtung in die Klemmstellung. Wenn umgekehrt die Rolle auf die Schrägfläche drückt, wird das Distanzstück im Wesentlichen gegen die Wirkung der Feder bewegt, es wird z.B. radial nach außen gedrückt oder es wird geschwenkt.

Im Gegensatz zum Stand der Technik wird die Anfederung der Rollen somit über Feder und Distanzstück erreicht. Die Feder drückt auf das Distanzstück, das Distanzstück drückt auf mindestens eine Rolle. Insbesondere drückt es die beiden Rollen eines Rollenpaars auseinander. Die Feder hat dabei einen Federweg, der nicht in der Verbindungslinie der beiden Rollen liegt, sondern quer hierzu verläuft, beispielsweise axial verläuft. Das Distanzstück ist beweglich. Über das im Wesentlichen starre Distanzstück wird die Federkraft umgelenkt, so dass letztendlich die notwendige Anfederung zwischen den beiden Rollen des Rollenpaars erreicht wird.

Es ist bevorzugt ein einstückiges Distanzstück zwischen einem Rollenpaar vorgesehen, das zur Anlage an beide Rollen des Rollenpaars kommt. In einer Alternative ist es allerdings auch möglich, für jede Rolle des Rollenpaars ein eigenes Distanzstück und ggf. auch eine eigene Feder vorzusehen.

Wenn ein Distanzstück zwischen den beiden Rollen des Rollenpaars vorgesehen ist, ergibt sich folgender Vorteil: Drückt eine der Rollen gegen die Schrägfläche und ist die dabei wirkende Kraft so groß, dass die über die Feder eingeleitete Kraft überwunden wird, drückt die Rolle das Distanzstück aus dem Weg, nämlich in die zurückgezogene Position. Somit wirkt die betrachtete Rolle nicht unmittelbar auf die andere Rolle des Rollenpaars ein, die andere Rolle wird nicht bewegt, jedenfalls möglichst nicht bewegt. Dies ist im Gegensatz zum Stand der Technik. Beim Stand der Technik wird dann, wenn die eine Rolle sich auf die andere Rolle zubewegt, das Distanzmittel komprimiert, so dass auch auf die andere Rolle eine Kraft übertragen wird. Sind separate Distanzstücke für jede Rolle vorgesehen, so wird eine Beeinflussung einer Rolle durch die andere im beschriebenen Sinne ebenfalls verhindert.

Die Feder ist vorzugsweise aus Metall hergestellt. Es kann ein Material gewählt werden, das besonders gute Federeigenschaften hat, beispielsweise Federbronze. Vorzugsweise ist die Feder Bestandteil eines größeren Federbauteils, beispielsweise als radial erstreckender Finger dieses Bauteils ausgebildet.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung nun beschrieben wird. In dieser Zeichnung zeigen:

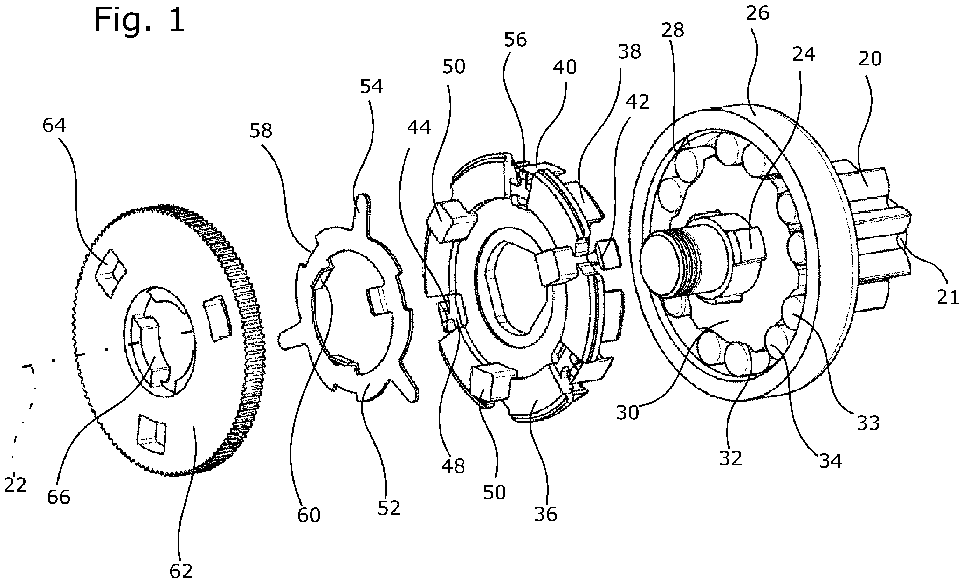

- Fig. 1:: ein perspektivisches Montagebild der wesentlichen Teile eines Klemmrollenfreilaufs,

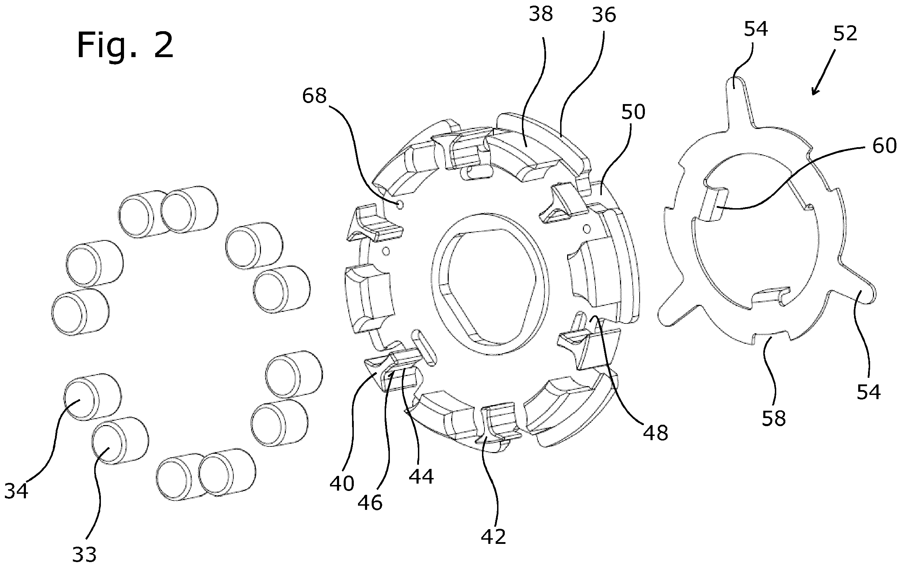

- Fig. 2:: ein perspektivisches Montagebild von drei Bauteilgruppen aus Fig. 1, nämlich eines Tragteils, der Rollen und eines Federbauteils, in einer anderen Blickrichtung als in Fig. 1 gesehen,

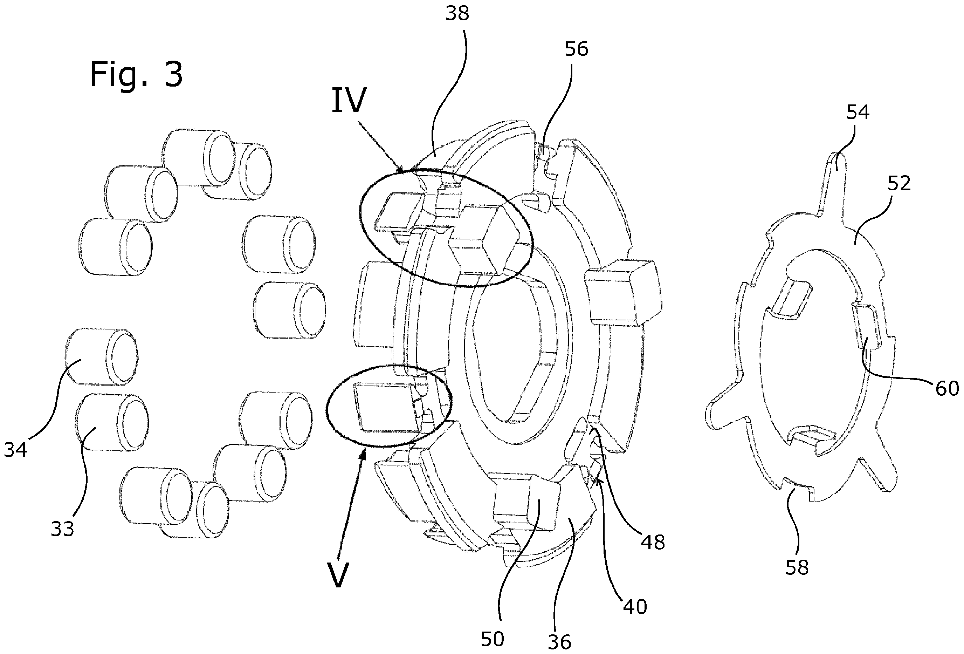

- Fig. 3:: ein perspektivisches Montagebild von drei Bauteilgruppen aus Fig. 2, jedoch nun in einer anderen Blickrichtung als in Fig. 2,
- Fig. 4:: eine vergrößerte Darstellung des Details IV aus Fig. 3,
- Fig. 5:: eine vergrößerte Darstellung des Details V aus Fig. 3,
- Fig. 6:: das Detail nach Fig. 5 in einer anderen Blickrichtung gesehen, und
- Fig. 7:: eine perspektivische Darstellung eines beweglichen Distanzelement, eines Rollenpaars und einer Feder.

Der Klemmrollenfreilauf hat ein Ritzel 20, das auf einer Ausgangswelle 21 sitzt und um eine Achse 22 drehbar ist. Im montierten Zustand des Klemmrollenfreilaufs ragt dieses Ritzel 20 frei an einer Seite vor. Das Ritzel 20 ist über einen zylindrischen Kragenbereich mit einem Keilwellenprofil 24 verbunden. Es hat an dem benachbarten Endbereich einen Stummel mit Gewinde, an dem ein Befestigungsmittel (nicht dargestellt) angebracht werden kann, das den Klemmrollenfreilauf zusammenhält und schließt. Mit dem Kragenbereich ist ein Gehäuse 26 in Kontakt und kann sich mit einem Lagerbereich um den Kragenbereich drehen.

Das Gehäuse 26 hat eine zylindrische Mantelfläche, die hier als zylindrische Innenfläche 28 ausgebildet ist, sie ist zentrisch zur Achse 22. Das Gehäuse 26 ist topfförmig, es ist in Richtung abgewandt vom Ritzel 20 offen. In den offenen Raum des Gehäuses 26 ist ein Klemmelement 30 eingebracht. Es hat ein Loch, das dem Keilwellenprofil 24 angepasst ist, so dass das Klemmelement 30 drehfest mit dem Ritzel 20 und damit der Ausgangswelle 21 verbunden ist. Das Klemmelement 30 hat an seiner radialen Außenfläche eine Anzahl n von V-förmigen Anordnungen. Diese haben jeweils eine linke und eine rechte Klemmschräge 32. Die beiden V-förmigen Anordnungen eines Rollenpars sind symmetrisch zu einer Radialen angeordnet. Die radiale Außenfläche des Klemmelements 30 liegt der Innenfläche 28 gegenüber. Dazwischen befinden sich Rollenpaare mit jeweils einer ersten Rolle 33 und einer zweiten Rolle 34.

Der Klemmrollenfreilauf hat insgesamt n Rollen 33, 34. Er hat n/2 erste Rollen 33 und n/2 zweite Rollen 34. Er hat n/2 Rollenpaare. Jeder V-förmigen Anordnung 32 ist eine Rolle 33 bzw. 34 zugeordnet. Im Normalzustand bzw. Ausgangszustand befinden sich die Rollen 33, 34 eines Rollenpaars auf den voneinander entfernten Klemmschrägen 32 ihrer V-förmigen Anordnungen. Diese Klemmschrägen 32 werden im Folgenden äußere Klemmschrägen 32 genannt. Die Rollen 33, 34 haben im Ausgangszustand daher nicht Kontakt mit den einander benachbarten Klemmschrägen 32 der V-förmigen Anordnungen eines Rollenpaars. Diese Klemmschrägen 32 werden im Folgenden innere Klemmschrägen 32 genannt.
In einer bevorzugten Ausführung verlaufen die beiden V-förmigen Anordnungen mit jeweils einer äußeren und jeweils einer inneren Klemmschräge 32 in Form eines W. Zu Einzelheiten wird auf die DE 10 2010 002 314 A1 verwiesen.

In axialer Reihenfolge hinter dem Gehäuse 26 und dem Klemmelement 30 befindet sich ein Tragteil 36, das ebenso wie das Klemmelement 30 mit dem Keilwellenprofil 24 wechselwirkt. Während das Klemmelement 30 mit dem Keilwellenprofil 24 im Wesentlichen schlupffrei verbunden ist, hat das Tragteil 36 eine innere Ausnehmung, die so mit dem Keilwellenprofil 24 zusammenwirkt, dass das Tragteil 36 um einen freien Drehwinkel von 5-25° gedreht werden kann, bis es ausgehend von einer Drehrichtung nach Wechsel der Drehrichtung wieder am Keilwellenprofil 24 in der anderen Drehrichtung anliegt. Das Tragteil 36 ist im Wesentlichen scheibenförmig, es deckt die offene Seitenfläche des im Wesentlichen topfförmigen Gehäuses 26 ab. Von der Scheibenfläche springen zum Gehäuse 26 hin insgesamt n/2 Vorsprünge 38 vor, die alle baugleich sind. Sie befinden sich im zusammengesetzten Zustand jeweils zwischen einem Rollenpaar 33, 34. Weiterhin springen in gleicher Richtung n/4 bewegliche Distanzelemente 40 und n/4 feste Distanzelemente 42 vor. Je ein Distanzelement 40 oder 42 befindet sich zwischen den beiden Rollen 33, 34 eines Rollenpaars. Die beweglichen Distanzelemente 40 und die festen Distanzelemente 42 sind alternierend in Umfangsrichtung angeordnet. Die beweglichen Distanzelemente 40 weisen ein Distanzstück 44 auf, das sich unmittelbar zwischen den beiden Rollen 33, 34 des Rollenpaars und normalerweise mit ihnen in Kontakt befindet. Dieses Distanzstück 44 hat zwei Seitenflächen, jeweils eine Seitenfläche ist einer Rolle 33 oder 34 zugewandt und normalerweise mit ihr in Kontakt. Mindestens eine Seitenfläche hat vorzugsweise mindestens eine, insbesondere zwei Schrägflächen 46. Durch die mindestens eine Schrägfläche 46 ist das Distanzstück 44 keilförmig, es verjüngt sich zum Klemmelement 30 oder zur zylindrischen Innenfläche 28 hin. In einer Alternativen kann es sich auch in einer anderen Richtung solange diese Richtung quer zur Umfangsrichtung ist, verjüngen.

Das bewegliche Distanzelement 40 ist über eine schmale Materialbrücke 48 mit dem Rest des Tragteils 36 verbunden. Diese Materialbrücke 48 wird nach innen hin durch ein Langloch begrenzt. Die Materialbrücke 48 wirkt als ein Scharnier, durch Bewegung der Materialbrücke 48 kann das bewegliche Distanzelement 40 relativ zum Rest des Tragteils 36 bewegt werden. Diese Bewegung erfolgt in einer Bewegungsrichtung 70. Im Ausführungsbeispiel ist die Bewegung eine Schwenkbewegung, andere Bewegungen sind dadurch nicht ausgeschlossen. Durch diese Bewegbarkeit unterscheiden sich die beweglichen Distanzelemente 40 von den festen Distanzelementen 42.

Auf der anderen Seite der Scheibe des Tragteils 36 springen drei Klauen 50 parallel zur Axialrichtung vor.

Wiederum in der betrachteten Aneinanderreihung entlang der Achse 22 gesehen außerhalb des Tragteils 36 befindet sich ein Federbauteil 52. Es hat einen Ringkörper, von dem radial nach außen n/4 Federn 54 wegstehen, die in axialer Richtung federn. Sie kommen in Kontakt mit Köpfen 56 der beweglichen Distanzelemente 40. Diese Köpfe 56 schaffen präzis definierte Anlagepunkte für die Federn 54. Sie stehen dafür in axialer Richtung geringfügig, z.B. 0,5 bis 2 mm, gegenüber dem Rest des beweglichen Distanzelementes 44 axial vor.

Das Federbauteil 52 hat drei Buchten 58, die mit den Klauen 50 wechselwirken. Es hat schließlich drei Finger 60, die axial vom Gehäuse 26 wegstehen.

Das letzte Bauteil innerhalb der angegebenen Reihenfolge ist ein Löserad 62. Es hat eine Außenverzahnung. Es hat drei Fenster 64, in die die Klauen 50 mit einem Winkelspiel eingreifen. Hierzu wird auf die genannte DE 10 2010 002 314 A1 verwiesen. Es hat schließlich drei Backen 66, die sich zwischen die Vorsprünge des Keilwellenprofils 24 einfinden und mit diesen eine drehspielbehaftete Drehverbindung eingehen.

Die Finger 60 wechselwirken mit dem Keilwellenprofil 24 und/oder den Backen 66. Die Federn 54 sind vorzugsweise mit einem Winkel zwischen 2 und 15° aus der Ebene des Rings des Federbauteils 52 abgewinkelt. Sie kommen bei einer axialen Montage mit ihren freien Enden zuerst in Kontakt mit den Köpfen 56.

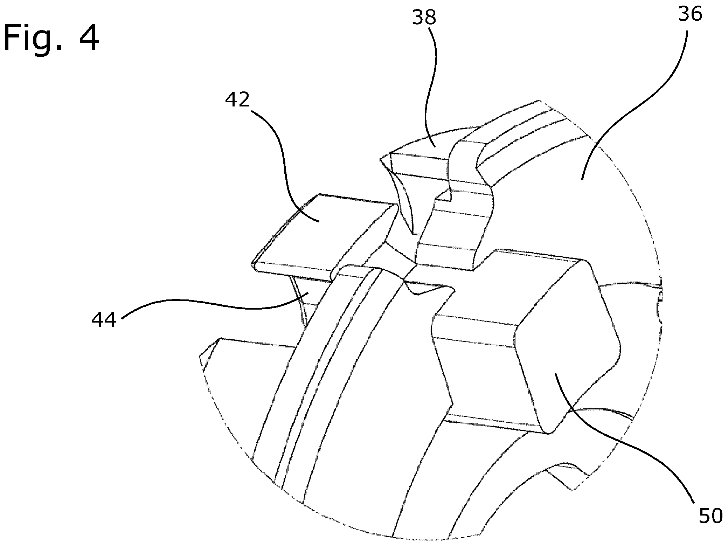

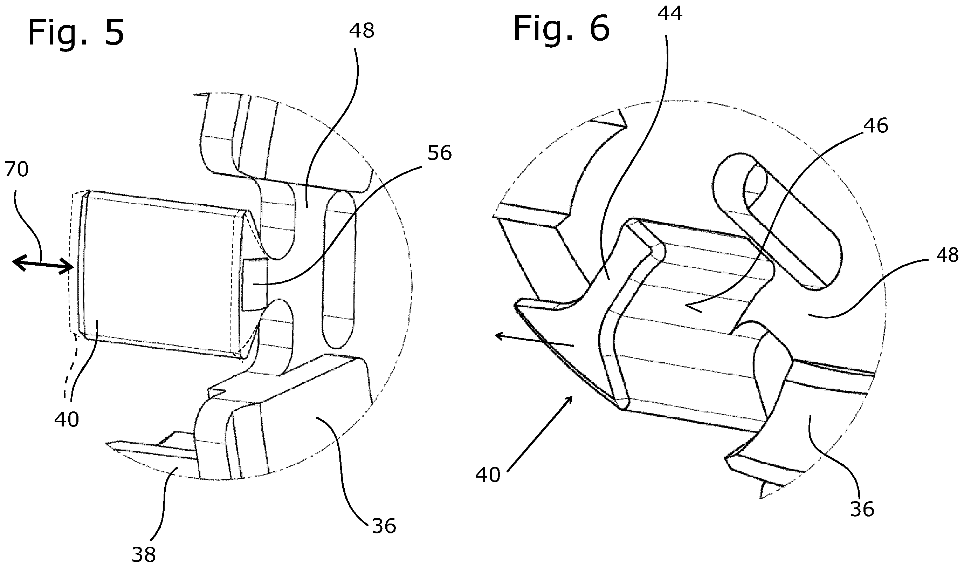

Fig. 4 zeigt ein festes Distanzelement 42 und den Bereich darum herum in größerem Maßstab. Die Figuren und in Fig. 5 bis 7 zeigen ein bewegliches Distanzelement 40 und seine Umgebung in größerem Maßstab und in unterschiedlichen Blickrichtungen.

Im gezeigten Ausführungsbeispiel ist n=12. Andere Werte für die Gesamtzahl n der Rollen 33, 34 sind möglich, beispielsweise 10, 14 und 16. Vorzugsweise ist n eine durch vier teilbare Zahl. Vorzugsweise ist n eine gerade Zahl.

Am Scheibenkörper des Tragteils 36 sind kleine, noppenartige Lagervorsprünge 68 vorgesehen, sie sind etwa im Durchmesser 0,5 bis 2 mm und haben eine Höhe von 0,2 bis 0,8 mm. Sie sind dort angeordnet, wo sich normalerweise die Achslinie einer Rolle 33, 34 befindet und geben eine bevorzugte Drehachse für diese Rolle vor.

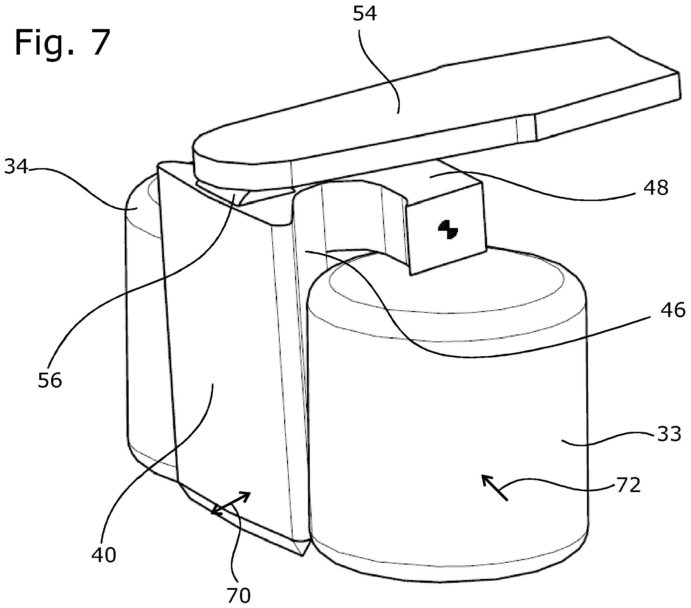

Die Funktion ist wie folgt: Durch die Feder 54 wird das jeweilige angefederte bewegliche Distanzelement 40 nach unten gedrückt, es kommt dadurch in eine verschobene Lage, diese ist in Figur 5 gestrichelt dargestellt, zudem ist sie in Figur 7 gezeigt. Sie wird als Normalposition bezeichnet. Wenn in Umfangsrichtung auf das Distanzstück 44 Druck ausgeübt wird, geht das bewegliche Distanzelement 40 entlang der Bewegungsrichtung 70 zunehmend in eine zurückgezogene Position, sie ist in Figur 5 mit ausgezogenen Strichen und in Fig. 7 nicht dargestellt. Wenn die Federkraft ganz durch den Druck kompensiert ist, befindet sich das bewegliche Distanzelement 40 in der zurückgezogenen Position. Diese ist auch die Position, die das bewegliche Distanzelement 40 bei Herstellung des Tragteils 36 und vor der Montage hat.

In der Normalposition ist das Distanzstück 44 leicht schräg zu einer Parallelen zur Achse 22 angestellt, wie aus Figur 7 ersichtlich ist. Die Rollen 33, 34 haben eine Rollenachse, die parallel zur Achse 22 verläuft. Drückt nun eine der Rollen 33 oder 34 gegen das Distanzstück 44, wie dies in Fig. 7 durch einen Pfeil 72 angedeutet ist, so wird das Distanzstück 44 in der Bewegungsrichtung 70 nach außen bewegt, also mehr oder weniger in die zurückgezogene Position bewegt. Dadurch ist die effektive Dicke des Distanzstücks 44, das sich zwischen den beiden Rollen 33, 34 befindet, nun geringer. Die effektive Dicke wird mit zunehmendem Erreichen der zurückgezogenen Position zunehmend geringer. Anders ausgedrückt können sich nun die Rollen 33, 34 näher kommen als zuvor.

Die beschriebene Bewegung des Distanzstücks 44 nach außen in der Bewegungsrichtung 70 wird durch die mindestens eine Schrägfläche 46 erreicht, an der die Rolle anliegt. Die Schrägfläche 46 rutscht unter dem Druck der Rolle nach außen. Eine Bewegung des Distanzstücks 44 in Umfangsrichtung wird dadurch verhindert, dass die Materialbrücke 48 praktisch nur ein Schwenken des beweglichen Distanzelements um eine Achse, die in Umfangsrichtung verläuft, zulässt.

Dies bedeutet, dass bei einem Druck auf die Rolle 33 im Sinne des Pfeils 72 das bewegliche Distanzelement 40 im Sinne der Bewegungsrichtung 70 nach außen geht, dadurch wird die Materialstärke des Distanzstücks 44 zwischen den beiden Rollen 33 und 34 geringer. Während dieses Vorgangs wird zunächst noch kein Druck auf die andere Rolle 34 ausgeübt. Im Gegensatz zum Stand der Technik geht also das Distanzstück 44 "aus dem Weg", es wird dünner, dadurch wirkt sich die Bewegung im Sinne des Pfeils 72 der Rolle 33 nicht auf die andere Rolle 34 aus.

Der Winkel, den die Schrägfläche 46 mit der Bewegungsrichtung 70 einschließt, ist kleiner als 90 Grad und größer als der Winkel der Selbsthemmung zwischen den verwendeten Materialien von Rolle und Distanzstück 44.

Anstelle von Rollen 33, 34 können andere Wälzkörper, beispielsweise tonnenförmige Wälzkörper, Kugeln oder dergleichen eingesetzt werden. An die jeweilige Form des Wälzkörpers muss das Distanzstück 44, insbesondere dessen mindestens eine Schrägfläche 46, angepasst werden.

Durch das Federbauteil 52 wird auch das gesamte Tragteil 36 gegen das Gehäuse 26 gedrückt. Die Geometrie ist so gewählt, dass diese Kraft auch dazu genutzt wird, die Rollen 33, 34 axial einzuspannen, sie werden gegen den Boden des Gehäuses 26 gedrückt. Dies erfolgt über den Lagervorsprung 68.

Die Rollenpaare, zwischen denen sich ein festes Distanzelement 42 befindet, werden nicht durch eine Feder 54 oder ein anderes Bauteil zum Klemmspalt, also zur äußeren Klemmschräge 32 hin angefedert. Die Rollen dieser n/4, im Ausführungsbeispiel sind es drei Rollenpaare liegen normalerweise jeweils in der Mitte ihrer beiden, V-förmig angeordneten Klemmschrägen 32. Diese Rollen gehen nach einem gewissen Drehwinkel zwischen Ritzel 20 und Gehäuse 26, beispielsweise nach 1,4 Grad in Klemmung. Im Stand der Technik ist dies bei zumindest der Hälfte dieser Rollen nicht der Fall, bei denen ein deutlich größerer Winkel, beispielsweise 3,3 Grad, benötigt wird, damit Klemmung vorliegt.

Bei dem erfindungsgemäßen Klemmrollenfreilauf ist von den Rollenpaaren, die einem beweglichen Distanzelement 40 zugeordnet sind, jeweils eine Rolle des Rollenpaares unmittelbar und sofort in Klemmung. Nach 1,4 Grad Drehwinkel kommen n/2 Rollen hinzu, die letzten n/4 Rollen kommen nach 3,3 Grad Drehwinkel hinzu.

Die Anmelderin behält sich vor, unabhängig von der Ausbildung der beweglichen Distanzelemente einen Klemmrollenfreilauf, der nur einige Rollenpaare über ein Distanzmittel in Klemmposition anfedert und der ansonsten feste Distanzelemente 42, wie sie oben beschrieben wurden, aufweist, unabhängig von der Lehre des Anspruchs 1 als Erfindung zu verfolgen.

Der Anmelder behält sich vor, Merkmale und auch Untermerkmale einzelner Ansprüche und/oder einzelner Sätze der Beschreibung beliebig miteinander kombinieren zu können, auch wenn eine derartige Kombination nicht unmittelbar aus dem Zusammenhang ersichtlich ist.

## Patentansprüche

1. Klemmrollenfreilauf für eine Verstelleinrichtung in einem Kraftfahrzeug, insbesondere in einem Kraftfahrzeugsitz, der Klemmrollenfreilauf weist auf
- eine zylindrische Mantelfläche, die eine Achse (22) definiert,
- mindestens ein Rollenpaar aufweisend eine erste Rolle (33) und eine zweite Rolle (34),
- eine Ausgangswelle, die zentrisch zur Achse (22) ist,
- ein Klemmelement (30), das mit der Ausgangswelle in Drehverbindung ist, und das mindestens eine Klemmschräge (32) aufweist, die sich auf einer der zylindrischen Mantelfläche gegenüberliegenden Seite des Rollenpaares befindet und
- ein Distanzmittel, das sich zumindest teilweise zwischen der ersten und zweiten Rolle befindet und das elastische Eigenschaften hat,
wobei das Distanzmittel ein Distanzstück (44) und eine Feder (54) aufweist, wobei das Distanzstück zwischen der ersten und der zweiten Rolle angeordnet ist, und mindestens eine Schrägfläche (46) aufweist, wobei in der Normalposition des Distanzstücks diese Schrägfläche an einer Rolle anliegt, und **dadurch gekennzeichnet, dass** das Distanzstück
in einer Bewegungsrichtung (70), die quer zur Umfangsrichtung verläuft, zwischen einer Normalposition und einer zurückgezogenen Position bewegbar ist, dass beim Übergang von
der Normalposition in die zurückgezogene Position die Schrägfläche (46) von der Rolle entfernt wird, und dass die Feder (54) das Distanzstück (44) in die Normalposition, in der es in Umfangsrichtung eine Kraft auf mindestens eine Rolle ausübt, vorbelastet.

2. Klemmrollenfreilauf nach Anspruch 1, **dadurch gekennzeichnet, dass** die Schrägfläche (46) einen Winkel kleiner 90 Grad mit der Bewegungsrichtung (70) einschließt, und dass der Scheitelpunkt dieses Winkels vorzugsweise zu dem Klemmelement (30) weist.

3. Klemmrollenfreilauf nach Anspruch 1 oder 2, **dadurch gekennzeichnet, dass** sich die Feder (54) außerhalb des Zwischenraums zwischen der ersten und der zweiten Rolle (33,34) befindet.

4. Klemmrollenfreilauf nach einem der vorangegangenen Ansprüche, **dadurch gekennzeichnet, dass** mehrere Rollenpaare vorgesehen sind, und dass nur einigen dieser mehreren Rollenpaare ein Distanzmittel bestehend aus einem Distanzstück (44) und einer Feder (54) zugeordnet ist.

5. Klemmrollenfreilauf nach einem der vorangegangenen Ansprüche, **dadurch gekennzeichnet, dass** ein Tragteil (36) vorgesehen ist, und dass das Distanzstück (44) von diesem Tragteil (36) gebildet wird.

6. Klemmrollenfreilauf nach einem der vorangegangenen Ansprüche, **dadurch gekennzeichnet, dass** die Feder (54) mit einer Kraftkomponente, die in axialer Richtung verläuft, auf das Distanzstück (44) drückt.

7. Klemmrollenfreilauf nach einem der vorangegangenen Ansprüche, **dadurch gekennzeichnet, dass** zumindest einer der beiden Rollen eine Doppelklemmkontur mit einer linken und einer rechten Klemmschräge (32) zugeordnet ist, wobei durch das Zusammenwirken der Rolle mit entweder der linken oder der rechten Klemmschräge (32), je nach Drehrichtung, und der zylindrischen Mantelfläche (28) Klemmung entsteht.

8. Klemmrollenfreilauf nach einem der Ansprüche 5 bis 7, **dadurch gekennzeichnet, dass** mindestens ein bewegliches Distanzelement (40) vorgesehen ist, das das Distanzstück (44) ausbildet und das um eine Achse, die parallel zur Umfangsrichtung verläuft, mit dem Rest des Tragteils (36) schwenkbar verbunden ist.

9. Klemmrollenfreilauf nach einem der vorangegangenen Ansprüche, **dadurch gekennzeichnet, dass** das Distanzmittel und die Feder (54) separate Bauteile sind.

10. Klemmrollenfreilauf nach einem der vorangegangenen Ansprüche, **dadurch gekennzeichnet, dass** das Distanzstück (44) unter der Wirkung der Feder (54) so auf die benachbarte Rolle drückt, dass diese in einem Winkel zur Umfangsrichtung belastet wird und stärker in Richtung zur Klemmschräge (32) und weniger in Richtung zur zylindrischen Mantelfläche (28) gedrückt wird

## Claims

1. A clamping roller freewheel for an adjusting device in a motor vehicle, in particular in a motor vehicle seat, the clamping-roller freewheel comprises:
- a cylindrical jacket surface that defines an axis (22),
- at least one pair of rollers comprising a first roller (33) and a second roller (34),
- an output shaft that is central relative to the axis (22),
- a clamping member (30) which is rotationally connected to the output shaft, and which has at least one inclined clamping surface (32) which is located on a side of the roller pair opposite to the cylindrical jacket surface, and
- a spacing means which is at least partially located between the first and the second roller and has elastic properties,
wherein the spacing means comprises a spacer (44) and a spring (54), wherein the spacer is disposed between the first and the second roller and comprises at least one inclined surface (46), wherein, in the normal position of the spacer, this inclined surface rests against a roller, and **characterized in that** the spacer can be moved between a normal position and a retracted position in a direction of movement (70) extending transversely to the circumferential direction, that during the transition from the normal position into the retracted position the inclined surface (46) is removed from the roller, and that the spring (54) biases the spacer (44) into the normal position in which it exerts a force on at least one roller in the circumferential direction.

2. The clamping roller freewheel according to claim 1, **characterized in that** the inclined surface (46) includes an angle of less than 90 degrees with the direction of movement (70), and that the apex of this angle preferably points towards the clamping member (30).

3. The clamping roller freewheel according to claim 1 or 2, **characterized in that** the spring (54) is located outside the intermediate space between the first and the second roller (33, 34).

4. The clamping roller freewheel according to any one of the preceding claims, **characterized in that** several roller pairs are provided, and that a spacing means consisting of a spacer (44) and a spring (54) is allocated to only some of these several roller pairs.

5. The clamping roller freewheel according to any one of the preceding claims, **characterized in that** a supporting part (36) is provided, and that the spacer (44) is formed by this supporting part (36).

6. The clamping roller freewheel according to any one of the preceding claims, **characterized in that** the spring (54) pushes against the spacer (44) with a force component extending in the axial direction.

7. The clamping roller freewheel according to any one of the preceding claims, **characterized in that** a double clamping contour with a left and a right inclined clamping surface (32) is allocated to at least one of the two rollers, wherein a clamping action arises due to the cooperation of the roller either with the left or right inclined clamping surface (32), depending on the direction of rotation, and the cylindrical jacket surface (28).

8. The clamping roller freewheel according to any one of the claims 5 to 7, **characterized in that** at least one movable spacer element (40) is provided which forms the spacer (44) and which is connected to the rest of the supporting part (36) in a pivotable manner about an axis extending parallel to the circumferential direction.

9. The clamping roller freewheel according to any one of the preceding claims, **characterized in that** the spacing means and the spring (54) are separate components.

10. The clamping roller freewheel according to any one of the preceding claims, **characterized in that** the spacer (44), under the action of the spring (54), pushes against the adjacent roller in such a way that the latter is loaded at an angle to the circumferential direction and is pushed more strongly in the direction towards the inclined clamping surface (32) and less in the direction towards the cylindrical jacket surface (28).

## Revendications

1. Roue libre à galets de serrage pour un dispositif de réglage dans un véhicule automobile, en particulier dans un siège de véhicule automobile, ladite roue libre à galets de serrage comprend:
- une surface latérale cylindrique qui définit un axe (22),
- au moins une paire de galets ayant un premier galet (33) et un deuxième galet (34),
- un arbre de sortie qui est centré par rapport à l'axe (22),
- un élément de serrage (30) qui est relié en rotation à l'arbre de sortie et qui présente au moins un biais de serrage (32) qui se trouve sur un côté de la paire de galets opposé à la surface latérale cylindrique, et
- un moyen d'écartement qui est situé au moins en partie entre les premier et deuxième galets et qui présente des propriétés élastiques,
dans laquelle ledit moyen d'écartement comprend une pièce d'écartement (44) et un ressort (54), dans lequel ladite pièce d'écartement est agencée entre les premier et deuxième galets et présente au moins une surface oblique (46), dans laquelle, dans la position normale de la pièce d'écartement, cette surface oblique est en appui sur un galet, et **caractérisée par le fait que** ladite pièce d'écartement peut être déplacée, dans une direction de déplacement (70) qui s'étend transversalement à la direction circonférentielle, entre une position normale et une position rétractée, que, lors du passage de la position normale à la position rétractée, la surface oblique (46) est éloignée du galet, et que le ressort (54) précontraint la pièce d'écartement (44) dans la position normale dans laquelle elle exerce une force sur au moins un galet dans la direction circonférentielle.

2. Roue libre à galets de serrage selon la revendication 1, **caractérisée par le fait que** la surface oblique (46) fait un angle inférieur à 90 degrés avec la direction de déplacement (70) et que le sommet de cet angle montre de préférence vers ledit élément de serrage (30).

3. Roue libre à galets de serrage selon la revendication 1 ou 2, **caractérisée par le fait que** le ressort (54) se trouve en dehors de l'intervalle entre les premier et deuxième galets (33, 34).

4. Roue libre à galets de serrage selon l'une quelconque des revendications précédentes, **caractérisée par le fait que** plusieurs paires de galets sont prévues, et qu'un moyen d'écartement se composant d'une pièce d'écartement (44) et d'un ressort (54) n'est associé qu'à quelques-unes de cette pluralité de paires de galets.

5. Roue libre à galets de serrage selon l'une quelconque des revendications précédentes, **caractérisée par le fait qu'**un élément de support (36) est prévu et que ladite pièce d'écartement (44) est formée par cet élément de support (36).

6. Roue libre à galets de serrage selon l'une quelconque des revendications précédentes, **caractérisée par le fait que** ledit ressort (54) appuie sur ladite pièce d'écartement (44) avec une composante de force qui s'étend dans la direction axiale.

7. Roue libre à galets de serrage selon l'une quelconque des revendications précédentes, **caractérisée par le fait qu'**à l'un au moins des deux galets est associé un double contour de serrage avec un biais de serrage gauche et un biais de serrage droite (32), dans lequel un serrage est produit par la coopération du galet avec soit le biais de serrage gauche soit le biais de serrage droite (32), en fonction de la direction de rotation, et la surface latérale cylindrique (28).

8. Roue libre à galets de serrage selon l'une quelconque des revendications 5 à 7, **caractérisée par le fait qu'**au moins un élément d'écartement (40) mobile est prévu qui forme la pièce d'écartement (44) et qui est relié à pivotement au reste de l'élément de support (36) autour d'un axe qui s'étend parallèlement à la direction circonférentielle.

9. Roue libre à galets de serrage selon l'une quelconque des revendications précédentes, **caractérisée par le fait que** le moyen d'écartement et le ressort (54) sont des composants séparés.

10. Roue libre à galets de serrage selon l'une quelconque des revendications précédentes, **caractérisée par le fait que** la pièce d'écartement (44) s'appuie sous l'action du ressort (54) de telle sorte sur le galet adjacent que celui-ci soit sollicité à un angle par rapport à la direction circonférentielle et soit poussé plus fortement en direction du biais de serrage (32) et moins en direction de la surface latérale cylindrique (28).
